# EUROPÄISCHE PATENTANMELDUNG

(11) **EP 1 088 637 A2**
(43) Veröffentlichungstag der Anmeldung: **04.04.2001**
(21) Anmeldenummer: 00121586.2
(22) Anmeldetag: 02.10.2000
(51) Int. Cl.: B29B 7/60, B29B 7/74, B29C 44/38, F16L 55/162

(54) **Verfahren und Vorrichtung für das Verarbeiten von Zweikomponentenkunststoff**

(30) Priorität: 01.10.1999 CH 180999
(71) Anmelder: Zuberbühler, Peter, 9100 Herisau (CH)
(72) Erfinder: Zuberbühler, Peter, 9100 Herisau (CH)
(74) Vertreter: Ackermann, Ernst

(57) **Zusammenfassung**

Die neue Lösung schlägt vor, die Mischung der Zweikomponenten-Kunststoff beim Einsatz in Kanalsanierungen oder für das bauseitige Einbringen von 2-Komponenten-Schäumen über einen Luftmotor sowie zwei Mischpumpen herzustellen. Die Mischpumpen bevorzugt als Zahnradpumpen werden von dem Luftmotor über eine Kette mit angepassten Ritzeln zwangsangetrieben. Der grosse Vorteil liegt darin, dass keine weitere Steuerleitungen benötigt werden. Es sind zwei Alternativen möglich. Bei der einen wird je ein Arbeitsbehälter für die beiden Komponenten, welche an die Reparaturstelle mitgeführt. Bei der zweiten wird der mit Luft betätigte Mischkopf direkt von aussen über Komponentenleitungen gespiesen.

## Beschreibung

Die Erfindung betrifft ein Verfahren für das Verarbeiten von Zweikomponentenkunststoffen, insbesondere für das Sanieren von Einläufen in Kanäle und für das bauseitige Einbringen von Schäumen nach dem Injektionsprinzip. Die Erfindung betrifft ferner eine Vorrichtung zum Aufbereiten, Fördern und Mischen von Zweikomponentenkunststoffen, für das Verarbeiten im Injektionsverfahren, insbesondere für das Sanieren von Einläufen in Kanalrohre, oder das bauseitige Einbringen von Schäumen.

Zweikomponentenkunststoffe haben die Eigenheit, dass die Komponenten bei getrennter und luftdichter Lagerung über längere Zeit unverändert im Originalzustand verbleiben. Sobald die Komponenten zusammengebracht bzw. gut zusammengemischt werden, beginnt sofort eine chemische Reaktion. Die entscheidende und auch gewünschte Folge ist der Übergang der noch flüssigen und zähflüssige Masse in die Erstarrung bzw. in einen irreversiblen Festkörperzustand. Für das Verarbeiten einer kleinen Menge ergeben sich keinerlei Probleme. Die industrielle oder bauseitige Verarbeitung stellt jedoch sehr hohe Ansprüche an die apparative Einrichtung. Dies aus dem einfachen Grund, weil die Reaktion nicht nur im resultierenden Arbeitserzeugnis sondern an allen Stellen gleichzeitig eintritt, an welchen die Komponenten zusammengebracht werden. Betroffen davon sind alle Teile, wie Verbindungsleitungen, Ventile, Verschlüsse, Mischkörper usw. In einer Anlage für den industriellen Einsatz z.B. für die serienmässige Herstellung von Giessteilen, aber auch bei grossflächigem Auftrag erfolgt die Zusammenführung räumlich und zeitlich erst unmittelbar vor dem Ein- oder Auftrag. Wird ein mechanischer Mischkopf eingesetzt, muss dieser sofort nach Beendigung einer Arbeit gereinigt werden. Andernfalls muss der Mischkopf weggeworfen werden.

Ein grosses Anwendungsgebiet von Kunststoffen sind Kanalisationsleitungen. Diese wurden vor einigen Jahrzehnten noch ausschliesslich in Ton- oder Zementröhren, in jüngster Zeit jedoch zunehmend in Kunststoff verlegt. Nach einigen Jahrzehnten, teils sogar aber schon nach einigen Jahren entstehen Schadstellen, z.B. an den Übergängen von zwei Rohrstücken. Mehr und mehr zeigt es sich, dass vor allem Abzweigungen bzw. die Einführungsstellen von Nebenleitungen in Hauptleitungen schadhaft werden. Gestiegende Anforderungen durch die Öffentlichkeit verlangen ein vollkommen dichtes Wasser- bzw. Abwassernetz. Dies traf in der Vergangenheit nur teilsweise zu.

Im Bereich von Zementröhren ist es nächstliegend, flüssigen Mörtel zu verwenden. Der flüssige Mörtel ist jedoch für das Abdichten kleiner Schadstellen bei Kunststoffrohren nicht geeignet, da gar keine echte Verbindung von Zementmörtel und Kunststoffrohr entsteht. Bei grossen Schadstellen kann mit dem relativ kostengünstigen Mörtel eine umfangreiche Ummantelung um die Schadstelle hergestellt werden. Alle Versuche, anstelle von Mörtel Zweikomponentenkunststoffe einzusetzen, haben sich in der Praxis nicht durchsetzen können. Das Problem mit der Aushärtung erwies sich bisher für die Praxis als unlösbar. Bei der Behebung von Schadstellen in Kanälen sind Verbindungsleitungen von bis zu 50 Metern und mehr erforderlich. Damit nach der Injektion die Reparaturstelle eine einwandfreie, glatte Oberfläche erhält, muss das Form- bzw. Injektionsschild nach Beendigung der Injektion wenigstens für einige Minuten in angepresstem Zustand an der Injektionsstelle verbleiben. Diese Erstarrungszeit reicht jedoch aus, dass die noch in den Zuführleitungen verbleibende gemischte Masse genau so erstarrt, so dass die entsprechenden Zuführleitungen nicht mehr verwendbar sind. Der bisherige Einsatz von Zweikomponentenkunststoff war nicht befriedigend.

Ein weiteres Anwendungsgebiet ist das bauseitige 2-Komponenten-Schäumen z.B. für die Wärmeisolation von Fernwärmerohren, Heisswasserleitungen, Dampf- und Kühlleitungen, oder auch für das Schallisolieren verschiedenster Bauelemente. Im Stand der Technik muss ein relativ schwerer Arbeitswagen an die Arbeitsstelle gebracht werden.

Der Erfindung wurde nun die Aufgabe gestellt, Mittel und Wege zu suchen für einen praxistauglichen Einsatz von Zweikomponentenkunststoffen im Injektionsverfahren, gleichsam auf der Baustelle. Dies betrifft einerseits den Bereich Sanierung und Reparatur von Kanalisationsleitungen, sei es für Meteorwasser oder Abwasser und andererseits das bauseitige Einbringen von Schäumen vor allem für Isolationszwecke.

Das erfindungsgemässe Verfahren ist dadurch gekennzeichnet, dass die beiden Komponenten unmittelbar am Einsatzort mittels einer Druckluftschlauchverbindung und Pumpen mit Luftmotorantrieb im gewünschten Verhältnis zwangsgemischt werden.

Die erfindungsgemässe Vorrichtung ist dadurch gekennzeichnet, dass sie als nahe an die Verarbeitungsstelle zuführbare Baugruppe ausgebildet ist, und eine mittels Luftmotor antreibbare Mischeinheit sowie eine nachziehbare, an eine Druckluftquelle anschliessbare Druckluftschlauchverbindurig aufweist.

Die Erfindung betrifft somit vor allem zwei Anwendungsgebiete. Für ein erstes Anwendungsgebiet weist sie eine als fahr- oder tragbare Einheit mit je einem Portionenbehälter für die zwei Komponenten sowie am Ende einer Arbeitslanze angeordneten mit Druckluft antreibbaren Mischeinheit auf, zum Einbringen der gemischten Komponenten nach dem Injektionsprinzip vor Ort, in dem Bereich einer Baustelle oder entsprechendem Maschinenarbeitsplatz, für Wärme- und/oder Schallisolation durch das bauseitige Einbringen von Schäumen.

Ein zweites Anwendungsgebiet ist das Sanieren vor allem von Einläufen in Kanäle. Hier bilden die Arbeitsbehälter wenigstens eine, vorzugsweise zwei flexibel verbindbare Zuggruppen, welche an einem vorausfahrenden Zugfahrzeug mit Injektionsschild angehängt, und die Gemischleitung direkt am Injektionsschild angekuppelt wird.

Die Erfindung betrifft ferner eine ganze Anzahl besonders vorteilhafter Ausgestaltungen. Hierzu wird auf die Ansprüche 2 bis 4 sowie 7 bis 11 Bezug genommen.

Die Erfindung wird nun an Hand von einigen Ausführungsbeispielen mit weiteren Einzelheiten erläutert. Es zeigen:
- die Figur 1: eine Schadstelle in dem Einmündungsbereich einer Nebenrohreinleitung in eine Hauptleitung;
- die Figur 2: schematisch die im Stand der Technik eingesetzte Methode der Sanierung mittels Mörtel;
- die Figuren 3a bis 3c: drei verschiedene Arbeitspositionen eines Injektionsschildes für den Einsatz von Mörtel oder Zweikomponentenkunststoff bei der Reparatur einer Schadstelle gemäss Figur 1;
- die Figur 4: schematisch die beiden Module für Harz und Härter;
- die Figuren 5a und 5b: die Mischkopfseite;
- die Figur 6: den Zwangsantrieb für die beiden Komponentenpumpen von einem Luftmotor;
- die Figur 7: die Figuren 7a und 7b zwei Einsatzdispositionen;
- die Figuren 8a und 8b: das Nachfüllen der Arbeitsbehälter aus Reservebehältern;
- die Figuren 9a und 9b: schematisch das bauseitige Einbringen von Schäumen.

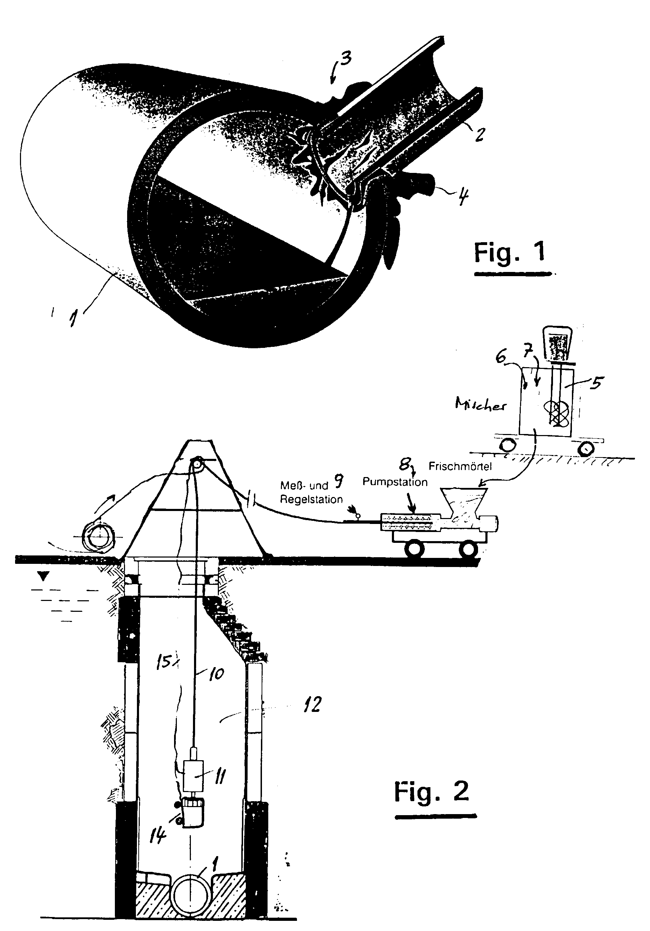

Die Figur 1 zeigt eine typische Schadstelle 3, welche sich in dem Einführbereich eines kleineren Einführstutzens 2 in ein Hauptrohr 1 befindet. Beim gezeigten Beispiel handelt es sich um einen unkomplizierten Fall einer kleineren Schadstelle. Es ist insofern ein unkomplizierter Fall, als auch die um die Schadstelle herum bestehenden Hohlräume 4 (schwarz markiert) relativ klein sind. Hier kommt die neue Lösung zum Einsatz. In den Fällen, bei denen die Hohlräume enorm gross sind, bietet sich die Lösung des Standes der Technik mit Mörtel an, da die Mörtelmasse nur ein Bruchteil kostet, im Vergleich mit Zweikomponentenkunststoffen.

Die Figur 2 zeigt schematisch die Methode mit Mörtelfüllung. In einem Mischer 5 werden Trockenmörtel 6 sowie Wasser vorgemischt und direkt in eine Pumpstation 8 nach Bedarf gefüllt. Am Ausgang der Pumpstation 8 befindet sich eine Mess- und Regelstation 9, von welcher ein Druckschlauch 10 mit einem Injektionskopf 11 in einem Schacht 12 mit Hilfe eines Krans 13 abgelassen wird. Der Injektionskopf 11 ist an einem Zugfahrzeug 14 angehängt, welches als erstes in die Öffnung des Hauptrohres 1 geschoben wird. Der Druckschlauch 10 wird mit samt einer Stromversorgung 15 für das Zugfahrzeug 14 durch das Zugfahrzeug selbst in dem Hauptrohr 1 nachgezogen, bis der Injektionskopf die Schadstelle erreicht.

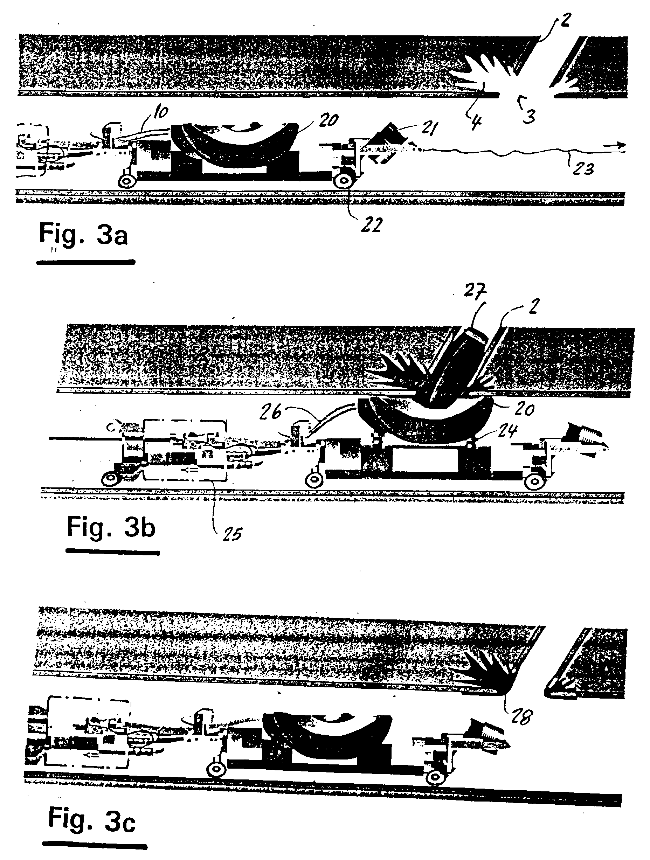

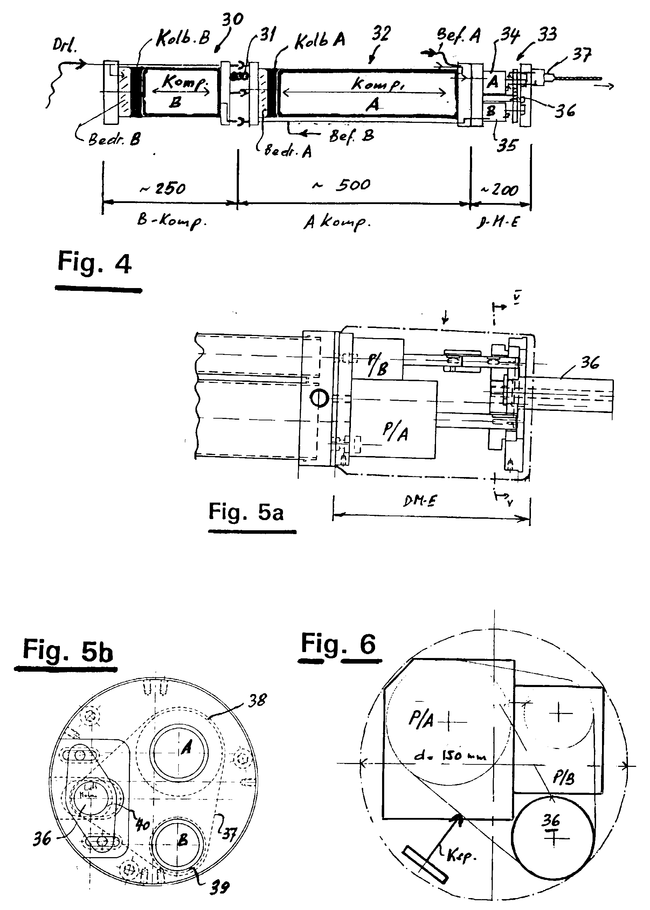

Die Figur 3a zeigt die Zufahrbewegung eines Injektionsschildes 20 an eine Schadstelle 3. Die Figur 3a zeigt bereits einen Einsatz wie er auch mit der neuen Lösung vor sich geht, wobei anstelle des Druckschlauches 10 für Mörtel die Elemente der neuen Lösung eingesetzt werden können, wie mit der Figur 4 sowie der weiteren noch ausführlich dargestellt wird. Bei der neuen Lösung muss genau so wie im Stand der Technik vorgängig der Abdichtung der Schadstelle 3 mit einem Fräswerkzeug der ganze Reparaturbereich im Hauptrohr 1 sowie im einführstutzen 2 mit einem Fräskopf sauber gemacht werden, da meistens Verkrustungen sowie Schlammansätze um die Schadstelle herum vorhanden sind. Dieser Teil wird als bekannt vorausgesetzt. Ein unentbehrliches Hilfsmittel ist eine von aussen bedienbare Kamera 21, mittels der die Schadstelle über einen Bildschirm abgesucht und geprüft werden kann. Die Figur 3a zeigt eine Anfahrposition des Injektionsschildes 20, das auf Rollen 22 über ein Seil 22 in die optimale Position gezogen werden kann.

Die Figur 3b zeigt eine Situation bei welcher das Zweikomponentengemisch bereits in die Hohlräume gespritzt wurde. Das Injektionsschild 20 wird über Druckzylinder 24 nach oben gehoben, ein Dichtschlauch 27 in den Einführstutzen 2 geschoben und aufgeblasen. Das Zweikomponentengemisch wurde in einer Mischeinheit 25 aufbereitet und über einen Gemischschlauch 26 der Injektionsdüse zugeführt. Die Figur 3c zeigt die Situation nach beendigter Reparatur. An der Schadstelle ist manschettenartig der ganze Übergang 28 ausgekleidet, so dass die Stelle wieder dicht und der Übergang 28 mit glatten, sauberen Flächen versehen ist.

Bei der Entwicklung der Vergussmasse bestand die Schwierigkeit eine Epoxidvergussmasse zu formulieren die folgenden wichtigen Punkten genügen musste:
- gute Verbindung zwischen Vergussmasse mit Zement- resp. Kunststoffrohren,
- sehr schnelle Reaktionszeit, da sehr viel Wärme im Kanal abgeleitet wird und die Umgebungstemperatur relativ tief ist. Diese Reaktionszeit verkürzt auch die Sanierungszykluszeit,
- gute Mischbarkeit
- noch fliessfähig, ca. 25 000 mpas (nicht zu dünnflüssig und nicht zu dickflüssig), d.h. wenn sie zu dünn ist, kann sie aus der Form auslaufen, da das Abwasserrohr nicht 100 % formschlüssig abgedeckt werden und durch eventuell vorhandene Grundwasserströme wegfliessen kann. Wenn sie zu dickflüssig ist, füllt sie kleine Löcher und Schrunden im zu sanierenden Teil, nur ungenügend oder gar nicht mehr.

Die Figur 4 zeigt schematisch eine modulartig aufgebaute Kanalbaugruppe mit zwei Arbeitsspeichern für die Vorortaufbereitung von zwei geeigneten Kunststoffkomponenten Harz und Härter. Das Härtermodul 30 als Arbeitsspeicher für den Härter ist über eine kräftige und flexible Zugverbindung 31 direkt an dem Harzmodul 32 als Arbeitsspeicher für das dickflüssigere Harz angehängt. Beide Module weisen bevorzugt auf dem Umfang verteilte Rollen auf, wie dies z.B. bei Zugfahrzeugen für die Rohrsanierung bekannt ist. Am Harzmodul 32 ist auf der Vorderseite ein ganzer Mischkopf 33 als Dosier- und Mischeinheit mit einer Zahnradpumpe 34 für das Harz sowie einer Zahnradpumpe 35 für den Härter, ferner einen Luftmotor 36. Die beiden Ausgänge der Zahradpumpe sind zusammen geführt und münden in einen statischen Mischer 37, welcher mit der Spritzdüse des Injektionsschildes verbindbar ist.

Wichtig ist die Aufgliederung der Module, da diese vielfach durch Schächte mit 60 oder 80 cm Durchmesser abgesenkt und in die horizontalen Ein- bzw. Ausgänge der Rohrleitungen eingeschwenkt werden müssen. Das Zusammenmontieren kann vielfach nur Stück um Stück erfolgen. In engen Platzverhältnissen wird Modul um Modul in das Rohr gestossen, das nächste angehängt und ebenfalls in das Rohr gestossen. Die Zahlen 250, 500 und 200 geben nur Anhaltspunkte für die Modullängen in Millimetern. Komp. B bedeutet Komponente B und ist der Härter. Komp. A bedeutet Komponente A und ist das Harz. Kolb. B ist der Kolben B und Kolb. A ist der Kolben A. Bef. A ist die Befüllung des Harzmodules 32, mit Harz z.B. aus einem Reservebehälter 52. Bef. B ist die Befüllung des Härtermodules 30 mit Härter z.B. aus einem Reservebehälter 53. D - M - E bedeutet die Dosier- und Mischeinheit 33.

Die Figuren 5a und 5b zeigen einen Mischkopf 33 in grösseren Massstab. Der Luftmotor 36 ist am Mischkopf 33 vorstehend ausgebildet, wird jedoch bevorzugt im Inneren des Mischkopfs 33 angeordnet, damit Länge gewonnen und die Beschädigungsgefahr reduziert wird. Der ganze Mischkopf ist insofern eine autonome Einheit, als dass er einmal mit Druckluft versorgt über seine Elemente eine exakte Mischung hergestellt. Auf den Luftmotor 36 wird Druckluft gegeben. Dieser treibt in der Folge über eine Übertriebskette 37 sowie den dem Mischungsverhältnis angepassten Ritzel 38, 39 und 40 für den Luftmotor bzw. die Pumpe A und B letztere zwangsweise an. Wird die Druckluft abgestellt, stoppt der Luftmotor und gleicherweise die Förderung der zwei Komponenten des Kunststoffes. Der Luftmotor ist damit die treibende Kraft und hat Förder- und Stopp- sowie als Konsequenz Ventilfunktion.

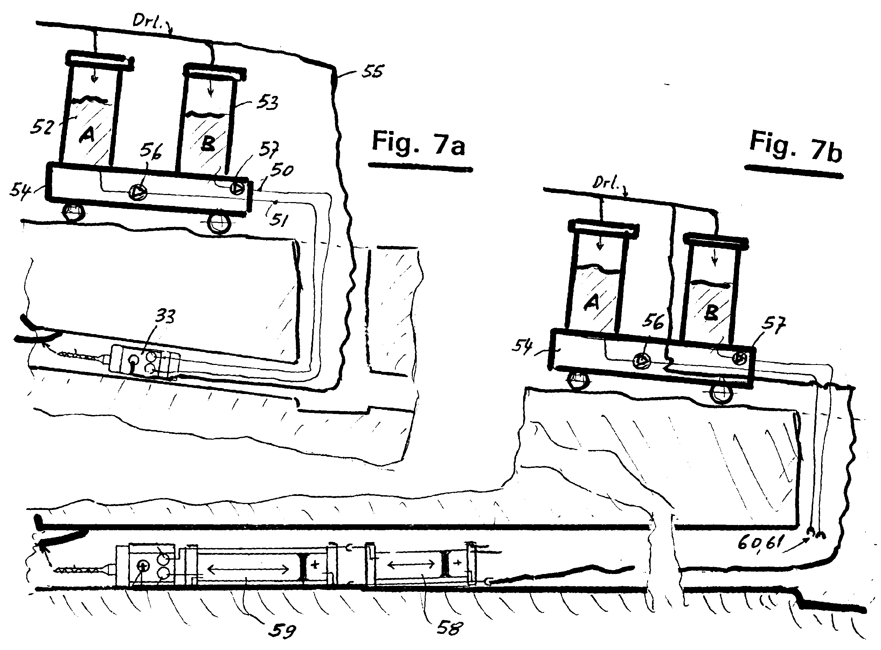

In Figur 6 ist mit d = 150 mm der äussere Begrenzungskreis der beiden Module erkennbar. P/A ist die Pumpe für die Komponente A. P/B ist die Pumpe für die Komponente B. Ksp ist schematisch und stellt den Kettenspanner dar.

Die Figur 7a zeigt eine Disposition bei der die Komponenten A und B über Verbindungen 50 und 51 an den Mischkopf 33 zuführen. Die Reservebehälter 52 und 53 für Harz und Härter werden bevorzugt auf einen Rollschemel 54 nahe an den Schacht platziert, damit keine unnötigen Schlauchleitungslängen benötigt werden. Wichtig bei diesem Konzept ist die Gemischsteuerung durch die Zu- und Abschaltung von Druckuft über eine Druckluftleitung 55, welche von einem Druckerzeuger einerseits in die Zylinder der Reservebehälter 52 und 53 und anderseits an den Mischkopf geführt ist. Da es sich teils um sehr zähflüssgie Massen handelt, muss die Nachlieferung der Rohkomponenten unterstützt werden, wie mit dem Druckluftanschluss in die Reservebehälter. Sobald grössere Längen an Schlauchverbindungen für die Kunststoffkomponenten erforderlich sind muss zusätzlich noch Förderpumpen 56 und 57 eingesetzt werden. Die Förderpumpen haben keine Gemischdosierfunktion, da eine solche wegen der Frage der Temperatur sowie Viskosität viel zu ungenau wäre. Die Figur 7a ist vor allem auch für grosse Rohrquerschnitte z. B. grösser als 200 mm Rohrdurchmesser optimal geeignet. Die Figur 7b zeigt eine Alternative, wenn sehr grosse Distanzen zwischen dem Bedienschacht sowie der Schadstelle von z.B. 30 bis 50 Meter und mehr bestehen. Hier haben die Pumpen 56 und 57 eine reine Füllfunktion für die beiden Arbeitsbehälter 58 und 59, welche von Zeit zu Zeit nachgefüllt werden. Dafür werden die beiden Module zurückgezogen und an Schnellkupplungen 60, 61 angehängt, so dass eine bequeme Nachfüllung für beide Komponenten vor sich gehen kann. Alle Verbindungen zwischen den Modulen werden bevorzugt mittels Schnellkupplungen hergestellt, so dass auch das Verlegen und Demonstieren rasch vor sich gehen kann.

Die neue Lösung hat eine ganze Anzahl von Vorzügen: Die aufwendige Schlauchreinigung die bei einem Verguss im herkömmlichen System mit Mörtel angewendet wird, entfällt gänzlich. Die geringe Baulänge, der ganzen Vorrichtung von ca. 700 mm erlaubt ein Einführen der Misch- und Dosieranlage an allen bauüblichen Schächten. Diese haben in aller Regel einen Durchmesser von 800 mm, in seltenen Fällen 600 mm. Die Einführung der Anlage ist aber auch bei kleinem Durchmesser möglich. Die neue Lösung erlaubt, durch das frei wählbare Volumen der Portionenbehälter eine kürzere oder längere Bauweise. Mittels Schnellkupplungsanschlüssen kann der Härterbehälter in Sekundenschnelle angekoppelt werden. Der geringe Durchmesser der Misch- und Dosieranlage gestattet ein Einführen in Rohre mit Durchmesser 180 mm und grösser. Mit dem verwendeten Zweikomponenten-Kunststoff wird eine hervorragende Haftung erzielt. Dabei spielt es keine Rolle ob die zu sanierenden Rohre aus Zement, Kunststoff oder dergleichen sind. Die Konstruktion der Anlage erfordert nur eine völlig ungefährliche Energiequelle. Die Energie-Versorgung ist Druckluft. Durch eine einzige, flexible Schlauch-Verbindungsleitung wird die Energie zugeführt. Die Bedienung ist deshalb sehr einfach und sind im Wesentlichen reduziert auf Start oder Stop. Fehlmanipulationen sind damit praktisch ausgeschlossen. Mit der Anlage können Injektionsdrücke bis 100 bar erzielt werden. Durch den Luftmotorantrieb erzeugt die Anlage einen relativ hohen Lärmpegel. Dadurch kann die Funktion auch akustisch überwacht werden, (gute Schallfortpflanzung im Rohr). Diese Lärmquelle kann aber bei einem Einsatz auf der Baustelle mittels Schalldämpfer reduziert werden. Ein weiterer Vorteil dieser Anlage ist der geringe Platzbedarf zum Transport. Die Befüllanlage ist fahrbar und ist als Einheit geabaut. Auch diese hat einen sehr geringen Platzbedarf.

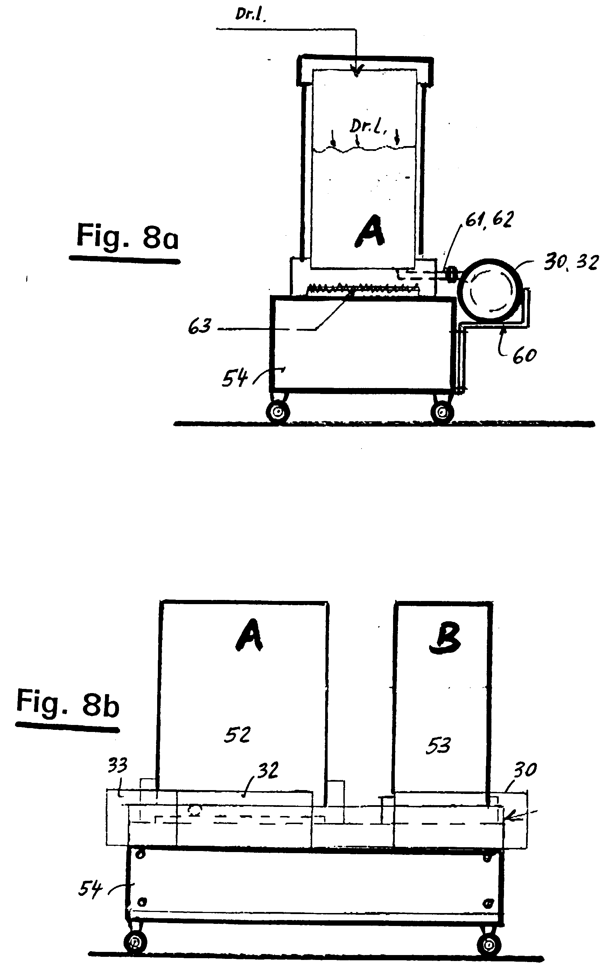

Die Figuren 8a und 8b zeigen das Nachfüllen der Arbeitsbehälter 30, 32 aus den entsprechenden Reservebehältern 52, 53. Am Rollschemmel 54 ist seitlich ein Haltesupport 60 angebracht. Die ganze Baugruppe, also Härtermodul 30, Harzmodul 32 mitsamt dem Mischkopf werden in zusammengebautem Zustand auf dem Haltesupport 60 genau positioniert, so dass über Schnellkupplungen 61 resp. 62 die Nachfüllung innert weniger Minuten vorgenommen werden kann. Wichtig ist dabei, dass die Komponenten in optimaler Temperatur gehalten werden. Dafür ist im unteren Bereich der Behälter eine Heizung 63 angebracht. Nach der Befülung ist die Vorrichtung wieder bereit für den nächsten Arbeitseinsatz.

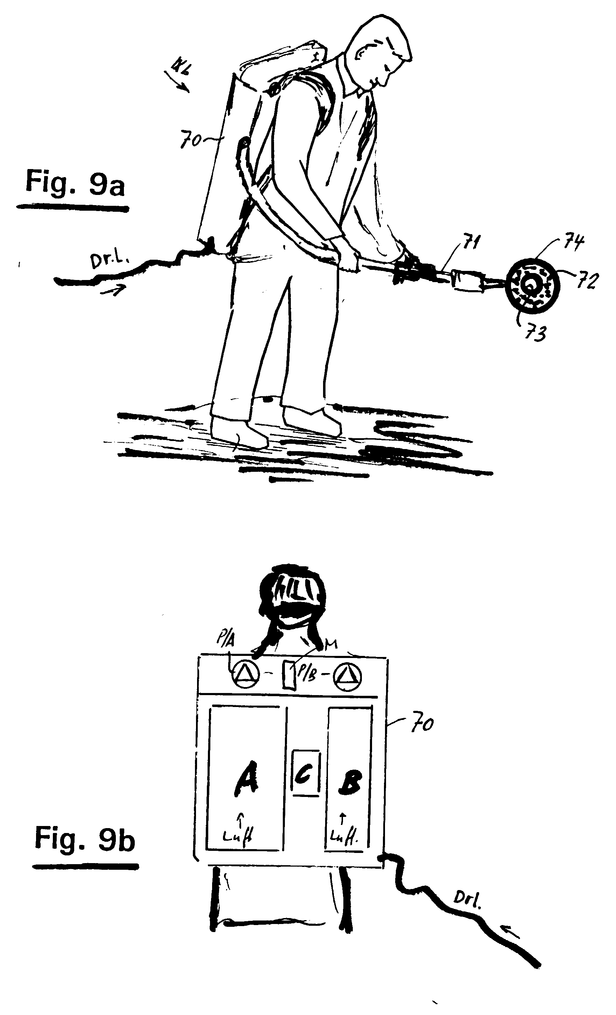

Die Figuren 9a und 9b zeigen nur schematisch, wie die ganze Vorrichtung als tragbare Einheit bauseitig zum Einsatz kommt. Die tragbare Einheit hat alle Grundkomponenten wie im Rohreinsatz, nur dass die Zuordnung Komponenten rucksackartig konzipiert ist, mit den beiden Komponentenbehältern nebeneinander und dem Luftmotor sowie den beiden Pumpen oben. Die zwei Komponenten werden über eine Lanze 71 direkt in die mit dem entsprechenden Schaum zu füllende Kavität 72 eingespritzt. Nur schematisch ist ein Rohr 73 mit einem Schutzmantel 74 dargestellt. C ist der Reiniger. Die Einsatzgebiete können irgend welche industrielle oder gewerbliche Einsätze für das Schall- und/oder Wärmeisolieren mit 2-Komponenten-Schäumen sein. Der entscheidende Vorteil der neuen Lösung liegt darin, dass die Arbeit von einem Bedienungsmann unmittelbar vor Ort durchführbar ist, z.B. für das Isolieren von Fernwärmerohre, Heisswasser-, Dampf- oder Kühlleitungen. Der Mann muss mit einem etwa 20 - 30 kg schweren Gerät keine elektrischen Leitungen nachziehen und in seine Körpernähe bringen. Damit besteht kein Unfallrisiko im Hinblick auf elektrischen Strom. Bei einem grösseren Gebäude können die Reservebehälter bzw. der entsprechende Rollschemmel z.B. unten beim Gebäude platziert werden. Es muss nicht wie im Stand der Technik eine gegebenenfalls mehr als 200 kg schwere Einheit über alle Stockwerke gehoben und verschoben werden.

## Patentansprüche

1. Verfahren für das Verarbeiten von Zweikomponentenkunststoff, insbesondere für das Sanieren von Einläufen in Kanäle oder das bauseitige Einbringen von Schäumen nach dem Injektionsprinzip,
**dadurch gekennzeichnet**,
dass die beiden Komponenten unmittelbar am Einsatzort über eine Druckluftverbindung mittels Mischpumpen mit Luftmotorantrieb im gewünschten Verhältnis zwangsgemischt werden.

2. Verfahren nach Anspruch 1,
**dadurch gekennzeichnet**,
dass die Komponenten durch Druckluftbeaufschlagung in den Arbeitsbehältern zwei Dosierpumpen, vorzugsweise Zahnradpumpen zugefördert in dem die exakte Mischung vorgenommen wird, und über einen Mischer der Injektionsstelle zugeführt werden.

3. Verfahren nach einem der Ansprüche 1 oder 2,
**dadurch gekennzeichnet**,
dass die beiden Mischpumpen von einem Luftmotor angetrieben und die zusammengeführten Komponenten über einen statischen Mischer der Injektionsstelle zugeleitet werden, wobei im Falle des bauseitigen Einbringens von Schaum ein mit einer Druckluftquelle verbundener Druckluftschlauch nachgezogen wird.

4. Verfahren nach Anspruch 1,
**dadurch gekennzeichnet**,
dass von den beiden Komponenten, Harz und Härter, etwa entsprechend dem Mischungsverhältnis eine Verarbeitungsmenge in zwei getrennten Arbeitsbehältern unmittelbar an den Einsatzort gebracht und die Mischung durch Entnahme aus dem Arbeitsbehältern hergestellt und eine periodische Nachfüllung aus Reservebehältern erfolgt.

5. Verfahren nach einem der Ansprüche 1 bis 4,
**dadurch gekennzeichnet**,
dass die Arbeitsbehälter für den Einstaz in Kanälen wenigstens eine, vorzugsweise zwei flexibel verbindbare Zuggruppen bilden, welche an einem vorausfahrenden Zugfahrzeug mit Injektionsschild angehängt und die Gemischleitung direkt am Injektionsschild angekuppelt wird.

6. Vorrichtung zum Aufbereiten, Fördern und Mischen von Zweikomponentenkunststoffen für das Verarbeiten im Injektionsverfahren, insbesondere für das Sanieren von Einläufen in Kanalrohre oder das bauseitige Einbringen von Schäumen,
**dadurch gekennzeichnet**,
dass sie als nahe an die Verarbeitungsstellen zuführbare Baugruppe ausgebildet ist und eine mittels Luftmotor antreibbare Mischereinheit mit Mischpumpen aufweist.

7. Vorrichtung nach Anspruch 6,
**dadurch gekennzeichnet**,
dass die Vorrichtung mit einer zumindest angenähert zylinderförmigen Aussenkontur ausgebildet ist für den Einsatz in Kanälen.

8. Vorrichtung nach Anspruch 6 oder 7,
**dadurch gekennzeichnet**,
dass die Baugruppe zweiteilig ausgebildet ist, welche je einen Arbeitsbehälter für Harz und Härter aufweist, wobei die beiden Arbeitsbehälter flexible Zugverbindungen aufweisen, und die beiden Arbeitsbehälter vorzugsweise im Zweikammersystem konzipiert sind mit je einem zylindrischen Förderkolben, welche rückseitig mit Druckluft beaufschlagbar sind, wobei ferner dem vorangehenden der beiden Arbeitsbehälter (A - Komponente) eine Mischergruppe mit Mischpumpen vorangesetzt und direkt mit diesem verbunden ist.

9. Vorrichtung nach Anspruch 8,
**dadurch gekennzeichnet**,
dass die Mischpumpen wenigstens einen Luftmotor, je eine Zahnradpumpe für die beiden Komponenten sowie einen Zwangsantrieb von der Ausgangswelle eines Luftmotores mit einem vorgegebenen Drehzahlverhältnis aufweist, wobei die beiden Mischerpumpenausgänge vorzugsweise über einen statischen Mischer mit der Verarbeitungsstelle verbindbar sind.

10. Vorrichtung nach Anspruch 6,
**dadurch gekennzeichnet**,
dass die mittels Druckluft antreibbare Mischeinheit angekuppelt oder integrierender Teil der Injektionsschildbaugruppe ist, an welche in flexibler Verbindung Komponenten- und Druckluftzuführleitungen anschliessbar sind.

11. Vorrichtung nach Anspruch 6,
**dadurch gekennzeichnet**,
dass sie für das Einbringen von Schäumen eine fahr- oder tragbare Einheit mit je einem Portionenbehälter für die Zweikomponenten sowie bevorzugt am Ende einer Arbeitsdüse oder Arbeitslanze angeordneter mit Druckluft antreibbaren Mischeinheit aufweist, zum Einbringen der gemischten Komponenten nach dem Injektionsprinzip vor Ort, in dem Bereich einer Baustelle oder entsprechendem Maschinenarbeitsplatz, wobei die Vorrichtung einen mit einer Druckluftquelle verbindbaren und nachziehbaren flexiblen Druckluftschlauch aufweist.
